# EUROPÄISCHE PATENTSCHRIFT

(11) **EP 0 939 003 B1**
(45) Veröffentlichungstag und Bekanntmachung des Hinweises auf die Patenterteilung: **26.01.2005**
(21) Anmeldenummer: 99100632.1
(22) Anmeldetag: 14.01.1999
(51) Int. Cl.: B60R 1/06

(54) **Kollisionsschutzvorrichtung für den Schutz herausragender Fahrzeugteile**
Anti-collision device for the protection of projecting vehicle parts
Dispositif anti-collision pour la protection des éléments de véhicule en saillie

(30) Priorität: 26.02.1998 DE 19808181
(43) Veröffentlichungstag der Anmeldung: 01.09.1999
(73) Patentinhaber: ROBERT BOSCH GMBH, 70442 Stuttgart (DE)
(72) Erfinder: Schenk, Joachim, 71282 Hemmingen (DE); Haderer, Guenter, 77815 Buehl (DE); Faust, Arno, 72131 Ofterdingen (DE)

(56) Entgegenhaltungen:
- DE-A- 4 114 016
- DE-A- 4 119 579
- DE-A- 19 623 469
- DE-U- 9 108 155
- US-A- 5 306 953
- US-A- 5 640 281

## Beschreibung

### Hintergrund der Erfindung

Diese Erfindung betrifft eine Vorrichtung für den Kollisionsschutz herausragender Teile von Kraftfahrzeugen, die einen steuerbaren Stellmechanismus wenigstens zum Einziehen und/oder Einklappen der herausragenden Kraftfahrzeugteile aufweist. Eine solche Vorrichtung ist aus der gattungsgemäßen US 5 640 281 A bekannt.

### Stand der Technik

Besonders seitlich aus Kraftfahrzeugen herausragende Teile, wie z.B. Gehäuse von Außenrückspiegeln, werden häufig beim Fahren oder Einparken des jeweiligen Kraftfahrzeugs durch Kollision mit seitlichen Objekten beschädigt oder gar abgerissen. Um dies zu vermeiden, sind die heute auf dem Markt angebotenen Kraftfahrzeuge, wie PKW und Nutzfahrzeuge, mit einklappbaren Außenspiegelgehäusen ausgerüstet. Die Spiegelgehäuseanklappung erfolgt z.B. auf Tastendruck vom Fahrer. Wird die Aufmerksamkeit des Fahrers, beispielsweise beim Einparken in enge Parklücken oder während des üblichen Betriebs eines Kraftfahrzeugs von anderen Dingen beansprucht, kann es dennoch vorkommen, daß ein seitliches Hindernis zur Beschädigung oder zum Abreißen des Außenspiegelgehäuses führt. Außerdem ist es üblich, die Außenspiegelgehäuse nach dem Einparken manuell oder auf einen Knopfdruck des Fahrers hin einzuklappen.

### Zusammenfassung der Erfindung

Es ist deshalb Aufgabe der Erfindung, eine gattungsgemäße Kollisionsschutzvorrichtung für den Schutz herausragender Teile von Kraftfahrzeugen anzugeben, die bei einer Kollisionsgefahr automatisch reagieren und das jeweils herausragende Kraftfahrzeugteil, ohne die Aufmerksamkeit des Fahrers zu beanspruchen, sicher einklappen oder einziehen und anschließend bei ausreichendem Abstand vom Kollisionsobjekt automatisch wieder ausklappen kann. Gemäß einer Weiterbildung soll das herausragende Kraftfahrzeugteil, insbesondere das Außenspiegelgehäuse auch nach dem Einparken des Kraftfahrzeugs automatisch eingeklappt werden.

Zur Lösung dieser Aufgabe ist eine Kollisionsschutzvorrichtung erfindungsgemäß dadurch gekennzeichnet, daß am Kraftfahrzeug mindestens ein funktionell mit dem Stellmechanismus verbundener Abstandserfassungsoder Näherungssensor vorgesehen ist, der den Abstand und/oder die Annäherung eines eine Kollisionsgefahr bildenden Objekts relativ zu einem jeweiligen herausragenden Kraftfahrzeugteil erfaßt, und daß der Stellmechanismus auf ein vom Sensor geliefertes, eine Kollisionsgefahr mit dem Objekt angebendes Erfassungssignal hin den betreffenden Kraftfahrzeugteil einzieht oder einklappt.

Wenn Kraftfahrzeugteile, wie dies bei Außenspiegelgehäusen der Fall ist, an den beiden Seiten des Kraftfahrzeugs herausragen, ist erfindungsgemäß zu bevorzugen, daß jedem herausragenden Kraftfahrzeugteil ein separater Sensor zugeordnet ist. Dabei kann der jeweilige Sensor in das herausragende Kraftfahrzeugteil integriert sein.

Auf diese Weise werden die Räume oder Objekte, in bzw. zwischen denen sich die Kraftfahrzeuge mit den herausragenden Teilen während des Fahrzeugstillstandes oder der Fahrt befinden oder bewegen, mit einem oder mehreren Abstandserfassungs- oder Annäherungssensoren abgetastet, z.B. nach vorne, hinten, nach der Seite, nach oben und/oder unten bzw. auch überdeckend.

Besteht Gefahr, daß ein herausragendes Kraftfahrzeugteil mit einem Gegenstand oder Körper kollidiert, wird erfindungsgemäß dieses Kraftfahrzeugteil teilweise oder vollständig eingeklappt oder eingezogen.

Gemäß einer bevorzugten Weiterbildung ist die Kollisionsschutzvorrichtung gemäß der Erfindung dadurch gekennzeichnet, daß im Kraftfahrzeug eine den Stellmechanismus ansteuernde und mit dem Sensor oder den Sensoren verbundene Steuervorrichtung vorgesehen und dazu eingerichtet ist, die Annäherungsgeschwindigkeit des Gegenstandes oder Körpers relativ zum jeweils herausragenden Kraftfahrzeugteil zu ermitteln. Dabei wird die Erfindung weitergebildet, indem die Steuervorrichtung die Einzugs- oder Einklappgeschwindigkeit des jeweiligen Stellmechanismus abhängig von der ermittelten Annäherungsgeschwindigkeit steuert oder regelt.

Die Steuervorrichtung kann außerdem den Einzieh- oder Einklappvorgang des oder der betreffenden Kraftfahrzeugteile abhängig von Parametern, wie Fahrzeuggeschwindigkeit, Fahrrichtung, Lenkungswinkel, Fahrbahnzustand, dem eingeparkten Zustand des Kraftfahrzeugs usw., bestimmen. Dann kann die Einzugs- oder Einklappgeschwindigkeit des jeweiligen Stellmechanismus von der Steuervorrichtung auch abhängig von diesen Parametern gesteuert oder geregelt werden.

Bei einer bevorzugten Weiterbildung steuert die Steuervorrichtung den Stellmechanismus zum automatischen Ausklappen oder Ausfahren des herausragenden Kraftfahrzeugteils an, nachdem sie anhand des oder der Steuersignale erkannt hat, daß genügend Abstand vom Kollisionsobjekt vorhanden ist.

Bei einer bevorzugten Ausführungsform der erfindungsgemäßen Kollisionsschutzvorrichtung dient diese zur Erfassung des Abstandes oder der Annäherung eines Objekts zu den seitlichen Außenspiegelgehäusen des Kraftfahrzeugs. In diesem Fall ist es von Vorteil, wenn die den jeweiligen Außenspiegelgehäusen zugeordneten Sensoren in diese Außenspiegelgehäuse integriert und ihre Abtastbereiche nach vorne ausgerichtet sind. Zusätzlich können Sensoren mit nach hinten orientierten Abtastbereichen für den Kollisionsschutz bei Rückwärtsfahrt vorgesehen sein.

Alternativ können für die Abstands- oder Näherungserfassung bereits vorhandene geeignete Sensoren für den erfindungsgemäßen Zweck verwendet werden, wenn solche Sensoren bereits im oder am Kraftfahrzeug eingebaut sind. Besonders geeignet sind Näherungssensoren, deren Abtastbereiche sich überschneiden und im wesentlichen nach vorne ausgerichtet sind. Ferner ist es möglich, die Sensorsignale mit Signalen von vorhandenen Türkontakten, Zündschlosskontakten o. dgl. zu kombinieren, wodurch sich ein automatisches Parken, d.h. Einklappen der Außenspiegelgehäuse im eingeparkten Zustand des Kraftfahrzeugs erreichen läßt.

Zusätzlich zu dem ohnehin vorhandenen Stellmechanismus für die Außenspiegelgehäuse kann der Stellmechanismus für den erfindungsgemäßen Zweck ein Schnell-Stellglied aufweisen, welches durch einen eine vorgespannte Feder aufweisenden Federmechanismus zum schnellen Einklappen/Bewegen des herausragenden Fahrzeugteils, d.h. des jeweiligen Außenspiegelgehäuses dient, und der vorhandene Stellmotor kann als Langsam-Stellglied zum Ausklappen des Außenspiegelgehäuses in seine herausragende Position dienen, wobei gleichzeitig die Feder des Schnell-Stellglieds vorgespannt wird.

Bei einer weiteren Ausführungsform der Erfindung kann die Steuervorrichtung bei einer Kollisionsgefahr dem Fahrer über eine vorhandene oder eine zusätzliche Warnvorrichtung das Anklappen/Einziehen mitteilen.

Die obigen und weitere Aufgaben und Merkmale dieser Erfindung werden nachfolgend in der eine bevorzugte Ausführungsform der erfindungsgemäßen Kollisionsschutzvorrichtung anhand der Zeichnung beschreibenden Beschreibung deutlich.
Fig. 1 zeigt schematisch und blockschaltbildartig ein erstes Ausführungsbeispiel, bei dem die Kollisionsschutzvorrichtung für den Kollisionsschutz von Außenspiegelgehäusen eingerichtet ist, und
Fig. 2 zeigt schematisch und blockschaltbildartig eine Weiterbildung der Ausführungsform in Fig. 1.

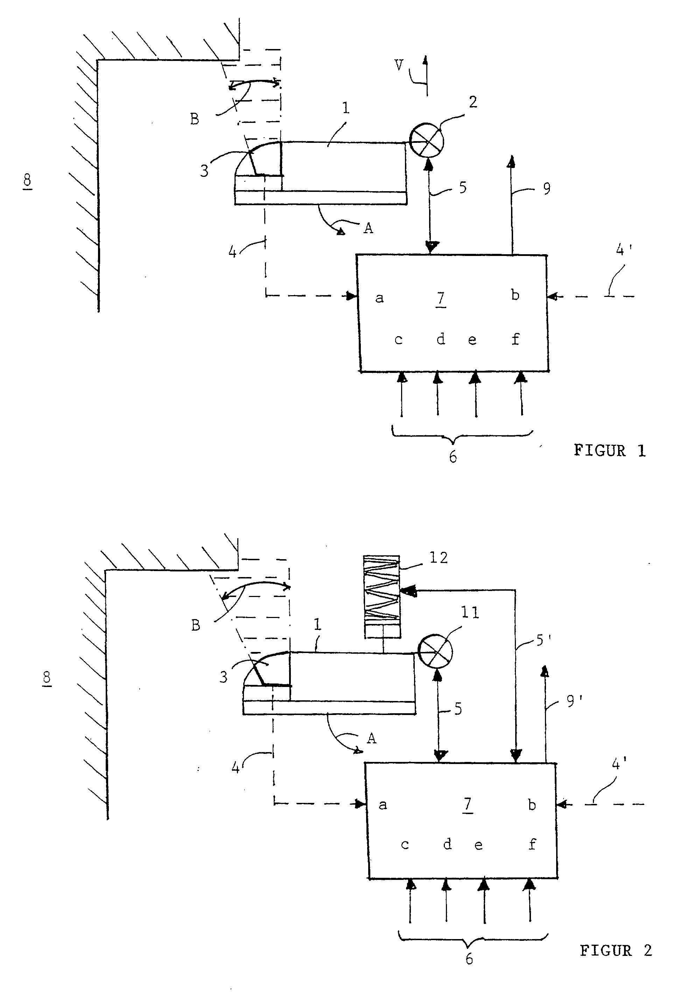

Fig. 1 zeigt schematisch und blockschaltbildartig eine erfindungsgemäße Kollisionsschutzvorrichtung, beispielhaft angewendet für den Kollisionsschutz eines einklappbaren Außenspiegelgehäuses 1 mit Hilfe eines Stellmechanismus 2, der z.B. ein üblicher elektromotorischer Stellmechanismus sein kann. Obwohl in Fig. 1 nur ein einziges Außenspiegelgehäuse 1 dargestellt ist, enthält ein Kraftfahrzeug im Regelfall auf der gegenüberliegenden Seite ein zweites gleichartiges einklappbares Außenspiegelgehäuse. Im Außenspiegelgehäuse 1 ist ein Abstandserfassungs- oder Näherungssensor 3 integriert, der den Abstand und/oder die Annäherung eines Objekts, z.B. einer Wand 8 erfaßt und ein entsprechendes Erfassungssignal 4 erzeugt. Der Abtastbereich (gestrichelt schattiert) ist bevorzugt im wesentlichen nach vorne (Pfeil V) gerichtet und der Erfassungswinkel ist mit B angedeutet. Selbstverständlich kann der Sensor 3 bei anderen Anwendungen auch so liegen oder eingerichtet sein, daß sein Abtastbereich zur Seite und nach vorne, d.h. in Fahrtrichtung V, auch nach hinten reicht. Eine Steuervorrichtung 7 empfängt das Erfassungssignal 4 vom Abstandserfassungs- oder Näherungssensor 3 an einem Eingang a und, ggf. ein zweites Erfassungssignal 4' von einem gleichartigen (nicht dargestellten) Sensor, der in einem (nicht dargestellten) gegenüberliegenden Außenspiegelgehäuse integriert ist.

Die Steuervorrichtung 7 kann weitere Signale über Türkontaktsignale, Zündschloßsignale, Fahrzeuggeschwindigkeit, Fahrtrichtung, Lenkungswinkel, Fahrbahnzustand usw., an Eingängen c, d, e, f empfangen. Die Steuervorrichtung 7 beaufschlagt den Stellmechanismus 2 mit einem Stellsignal 5 und kann gegebenenfalls ein Quittungs- oder Winkelsignal von dem Stellmechanismus 2 empfangen. Die Einklapprichtung ist mit A bezeichnet.

Selbstverständlich kann die Steuervorrichtung 7 eine ohnehin im Kraftfahrzeug vorhandene digitale Mikroprozessorsteuervorrichtung sein. Alternativ kann die Steuervorrichtung 7 auch eine separate, z.B. mit einem Mikroprozessor ausgerüstete, Steuervorrichtung sein, die speziell für die erfindungsgemäßen Funktionen eingerichtet ist.

Die Steuervorrichtung 7 ermittelt wenigstens aus den ihren Eingängen a bzw. b zugeführten Signalen 4 bzw. 4', ob eine Kollisionsgefahr des Außenspiegelgehäuses 1 mit dem Objekt 8 besteht. Außerdem kann die Steuervorrichtung 7 dazu eingerichtet sein, die Annäherungsgeschwindigkeit des Objekts 8 zum herausragenden Außenspiegelgehäuse 1 zu ermitteln. Falls die Steuervorrichtung 7 eine Kollisionsgefahr des Außenspiegelgehäuses 1 mit dem Objekt 8 erkannt hat, beaufschlagt sie den Stellmechanismus 2 mit einem Stellsignal 5 zum Einklappen des Außenspiegelgehäuses 1. Dies geschieht prinzipiell automatisch ohne Mitwirkung des Fahrers.

Ferner kann die Steuervorrichtung 7 aus der ermittelten Annäherungsgeschwindigkeit auch die Einklappgeschwindigkeit des Außenspiegelgehäuses 1 abhängig von der ermittelten Annäherungsgeschwindigkeit steuern oder regeln, indem sie den Stellmechanismus 2 mit einem dieser ermittelten Einklappgeschwindigkeit entsprechenden Stellsignal 5 beaufschlagt.

Weitere der Steuervorrichtung 7 an den Eingängen c-f zugeführte Signale 6 können zur Ermittlung der Kollisionsgefahr, der Einklappgeschwindigkeit des Außenspiegelgehäuses 1 und auch zur Ermittlung eines Einparkzustands des Kraftfahrzeugs herangezogen werden. Solche Signale können z.B. die Fahrzeuggeschwindigkeit, die Fahrtrichtung, den Lenkungswinkel, den Fahrbahnzustand, Schaltsignale von Türkontakten, von einem Zündschloßkontakt, oder auch die Umgebungssituation oder auch den Einsatzfall oder -ort des Kraftfahrzeugs angeben oder signalisieren.

Außerdem kann die Steuervorrichtung mit einem inversen Stellsignal das Außenspiegelgehäuse automatisch wieder ausklappen, wenn sie anhand des ihrem Eingang eingegebenen Sensorsignals erkannt hat, daß die Kollisionsgefahr vorüber ist.

Bei der modifizierten Ausführungsform gemäß Fig. 2 enthält der Stellmechanismus ein, beispielsweise motorbetriebenes, Langsam-Stellglied 11, das zum normalen, z.B. manuell betätigten, Einklappen und Ausklappen des Außenspiegelgehäuses 1 verwendet wird, und ein durch die Vorspannungskraft eines vorgespannten Federglieds kraftverstärktes Schnell-Stellglied 12, das parallel zum Langsam-Stellglied 11 liegt und von der Steuervorrichtung 7 durch ein eigenes Stellsignal 5 beaufschlagt wird. Bei Kollisionsgefahr wird die Federkraft der im Schnell-Stellglied 12 befindlichen Spannfeder zum schnellen Einklappen des Außenspiegelgehäuses 1 benutzt. Das Wiederausklappen erfolgt automatisch durch das normale, motorbetriebene Langsam-Stellglied 11, wenn der Abstand vom Kollisionsobjekt ausreichend groß ist, und bei diesem Vorgang wird die Vorspannungsfeder des Schnell-Stellglieds 12 erneut gespannt.

In Fig. 1 und Fig. 2 ist lediglich durch die Ausgangsleitung 9 von der Steuervorrichtung 7 angedeutet, daß die Steuervorrichtung bei einer Kollisionsgefahr eine im Kraftfahrzeug, z.B. im Armaturenbrett, eingebaute Warnvorrichtung zur Abgabe eines akustischen und/oder optischen Warnsignals aktivieren kann.

Selbstverständlich können die im Ausführungsbeispiel gemäß den Figuren 1 und 2 in den Außenspiegelgehäusen 1 eingebauten Sensoren 3 und die aus ihren Erfassungssignalen in der Steuervorrichtung 7 ermittelten Erfassungsergebnisse für weitere Funktionen benutzt werden. Darunter fallen z.B. ein Türöffnungs-Warnsignal oder eine Türöffnungs-Blockierung, wenn sich ein Objekt zu nahe an der zu öffnenden Tür befindet.

Statt der speziellen Sensoren in den Außenspiegelgehäusen können auch im Kraftfahrzeug bereits vorhandene geeignete Sensoren verwendet werden. Ferner ist der Einsatz mehrerer Sensoren möglich, deren Abtastbereiche sich überschneiden.

## Patentansprüche

1. Vorrichtung für den Kollisionsschutz herausragender Teile von Kraftfahrzeugen, die einen steuerbaren Stellmechanismus (2) wenigstens zum Einziehen und/oder Einklappen der herausragenden Kraftfahrzeugteile (1) aufweist,
**dadurch gekennzeichnet, daß** am Kraftfahrzeug mindestens ein funktionell mit dem Stellmechanismus (2) verbundener Abstandserfassungs- oder Näherungssensor (3) vorgesehen ist, zur Erfassung des Abstandes und/oder der Annäherung eines Objekts (8) relativ zu einem jeweiligen herausragenden Kraftfahrzeugteil (1), und daß der Stellmechanismus (2) auf ein vom Sensor (3) geliefertes, eine Kollisionsgefahr mit dem Objekt (8) angebendes Erfassungssignal (a,b) hin den betreffenden Kraftfahrzeugteil (1) einzieht oder einklappt.

2. Kollisionsschutzvorrichtung nach Anspruch 1, **dadurch gekennzeichnet, daß** jedem herausragenden Kraftfahrzeugteil (1) ein separater Sensor (3) zugeordnet ist.

3. Kollisionsschutzvorrichtung nach Anspruch 2, **dadurch gekennzeichnet, daß** der Abtstbereich (B) des Sensors (3) bzw. der Sensoren (3) im wesentlichen nach vorne in Fahrtrichtung (V) ausgerichtet ist.

4. Kollisionsschutzvorrichtung nach Anspruch 3, **dadurch gekennzeichnet, daß** der Sensor (3) in das herausragende Kraftfahrzeugteil (1) integriert ist.

5. Kollisionsschutzvorrichtung nach einem der vorangehenden Ansprüche, **dadurch gekennzeichnet, daß** im Kraftfahrzeug eine den Stellmechanismus (2) ansteuernde und mit dem Sensor (3) oder den Sensoren (3) verbundene Steuervorrichtung (7) vorgesehen und dazu eingerichtet ist, die Annäherungsgeschwindigkeit des Objekts (8) relativ zum jeweils herausragenden Kraftfahrzeugteil (1) zu ermitteln, und daß die Steuervorrichtung (7) die Einzugs- oder Einklappgeschwindigkeit des jeweiligen Stellmechanismus (2) abhängig von der ermittelten Annäherungsgeschwindigkeit steuert oder regelt.

6. Kollisionsschutzvorrichtung nach Anspruch 5**, dadurch gekennzeichnet, daß** die Steuervorrichtung (7) ferner dazu eingerichtet ist, das Einziehen oder Einklappen der betreffenden Kraftfahrzeugteile abhängig von weiteren Parametern, wie Einparkzustand des Kraftfahrzeugs, Fahrzeuggeschwindigkeit, Fahrrichtung, Lenkungswinkel, Fahrbahnzustand usw., zu bewirken.

7. Kollisionsschutzvorrichtung nach Anspruch 6, **dadurch gekennzeichnet, daß** die Steuervorrichtung (7), von weiteren Signalen, wie Türkontaktsignalen oder Zündschloßsignalen, beaufschlagt, die herausragenden Kraftfahrzeugteile immer einzieht bzw. einklappt, wenn das Kraftfahrzeug eingeparkt ist.

8. Kollisionsschutzvorrichtung nach Anspruch 6 oder 7, **dadurch gekennzeichnet, daß** die Einzugs- oder Einklappgeschwindigkeit des jeweiligen Stellmechanismus (2) von der Steuervorrichtung (7) auch abhängig von diesen Parametern steuer- oder regelbar ist.

9. Kollisionsschutzvorrichtung nach einem der Ansprüche 1 - 8, **dadurch gekennzeichnet, daß** die Abstandserfassungs- oder Näherungssensoren (3) zur Erfassung des Abstandes oder Annäherung eines Objekts zu durch je einen separaten Stellmechanismus (2) einklapp- oder einziehbaren Außenspiegelgehäusen (1) eingerichtet sind.

10. Kollisionsschutzvorrichtung nach Anspruch 9, **dadurch gekennzeichnet, daß** die den jeweiligen Außenspiegelgehäusen zugeordneten Sensoren (3) in diese Außenspiegelgehäuse (1) integriert sind.

11. Kollisionsschutzvorrichtung nach Anspruch 10, **dadurch gekennzeichnet, daß** die Steuervorrichtung (7) bei einer Kollisionsgefahr den jeweiligen Stellmechanismus (2) so ansteuert, daß dieser den Einklapp- oder Einziehvorgang des zugeordneten Außenspiegelgehäuses mit einer gegenüber einem normalen, handbetätigten Einklapp- oder Einziehvorgang erhöhten Geschwindigkeit ausführt.

12. Kollisionsschutzvorrichtung nach einem der vorangeganenen Ansprüche, **dadurch gekennzeichnet, daß** die Steuervorrichtung (7) dazu eingerichtet ist, den eingeklappten Kraftfahrzeugteil bei genügendem Abstand vom Kollisionsobjekt und unmittelbar nach dem Ausparken des Kraftfahrzeugs wieder automatisch auszuklappen.

13. Kollisionsschutzvorrichtung nach einem der vorangehenden Ansprüche, **dadurch gekennzeichnet, daß** jeder Stellmechanismus (2) ein motorbetriebenes oder hydro-pneumatisch betriebenes Langsam-Stellglied (11) zum normalen, manuell betätigten Ein- und Ausklappen der Außenspiegelgehäuse sowie ein durch die Vorspannungskraft eines vorgespannten Federglieds kraftverstärktes Schnell-Stellglied (12) aufweist, das parallel zum Langsam-Stellglied vorgesehen ist und von der Steuervorrichtung (7) bei einer Kollisionsgefahr zum Einklappen oder Einziehen des zugeordneten Außenspiegelgehäuses aktiviert wird.

14. Kollisionsschutzvorrichtung nach einem der vorangehenden Ansprüche, **dadurch gekennzeichnet, daß** die Steuervorrichtung (7) bei einer Kollisionsgefahr außerdem. zur Ansteuerung einer ein akustisches und/oder optisches Warnsignal im Kraftfahrzeug abgebenden Warnvorrichtung eingerichtet ist.

## Claims

1. Anti-collision device for the protection of projecting parts of motor vehicles, which has a controllable actuation mechanism (2) at least for retracting and/or folding in the projecting motor vehicle parts (1), **characterized in that** at least one distance-sensing or proximity sensor (3) which is functionally connected to the actuation mechanism (2) is provided on the motor vehicle in order to sense the distance from and/or the approach of an object (8) in relation to a respective projecting motor vehicle part (1), and **in that** the actuation mechanism (2) retracts or folds in the respective motor vehicle part (1) in response to a sensing signal (a,b) which is supplied by the sensor (3) and indicates a risk of collision with the object (8).

2. Anti-collision device according to Claim 1, **characterized in that** a separate sensor (3) is assigned to each projecting motor vehicle part (1).

3. Anti-collision device according to Claim 2, **characterized in that** the sensing range (B) of the sensor (3) or the sensors (3) is oriented essentially forwards in the direction (V) of travel.

4. Anti-collision device according to Claim 3, **characterized in that** the sensor (3) is integrated into the projecting motor vehicle part (1).

5. Anti-collision device according to one of the preceding claims, **characterized in that** the control device (7) which actuates the actuation mechanism (2) and is connected to the sensor (3) or the sensors (3) is provided and is configured to determine the approach speed of the object (8) in relation to the respectively projecting motor vehicle part (1), and **in that** the control device (7) controls or regulates the retraction speed or folding-in speed of the respective actuation mechanism (2) as a function of the approach speed which is determined.

6. Anti-collision device according to Claim 5, **characterized in that** the control device (7) is also configured to bring about the retraction or folding in of the respective motor vehicle parts as a function of further parameters such as the parked state of the motor vehicle, the velocity of the vehicle, the driving direction, the steering angle, the state of the underlying surface etc.

7. Anti-collision device according to Claim 6, **characterized in that**, when the motor vehicle is parked, the projecting motor vehicle parts are always retracted or folded in by the control device (7) when further signals such as door contact signals or ignition lock signals are applied to said control device (7).

8. Anti-collision device according to Claim 6 or 7, **characterized in that** the retraction speed or folding- in speed of the respective actuation mechanism (2) can also be controlled or regulated by the control device (7) as a function of these parameters.

9. Anti-collision device according to one of Claims 1 to 8, **characterized in that** the distance-sensing or proximity sensors (3) are configured to sense the distance from or the approach of an object to exterior mirror housings (1) which can be folded in or retracted by one separate actuation mechanism (2) each.

10. Anti-collision device according to Claim 9, **characterized in that** the sensors (3) which are assigned to the respective exterior mirror housings are integrated into these exterior mirror housings (1).

11. Anti-collision device according to Claim 10, **characterized in that**, when there is a risk of collision, the control device (7) actuates the respective actuation mechanism (2) in such a way that it carries out the folding-in process or retraction process of the assigned exterior mirror housing with a speed which is increased in comparison with a normal, manually activated folding-in process or retraction process.

12. Anti-collision device according to one of the preceding claims, **characterized in that** the control device (7) is configured to fold out the folded-in motor vehicle part again automatically when there is sufficient distance from the collision object and directly after the motor vehicle leaves the parked state.

13. Anti-collision device according to one of the preceding claims, **characterized in that** each actuation mechanism (2) has a motor-operated or hydropneumatically operated slow actuation element (11) for the normal, manually activated folding in and folding out of the exterior mirror housings as well as a high-speed actuator element (12) which is boosted by the prestress force of a prestressed spring element and which is provided in parallel with the low-speed actuator element, and is activated by the control device (7) in order to fold in or retract the assigned exterior mirror housing when there is a risk of collision.

14. Anti-collision device according to one of the preceding claims, **characterized in that**, when there is a risk of collision, the control device (7) is also configured to actuate a warning device which outputs an acoustic and/or visual warning signal in the motor vehicle.

## Revendications

1. Dispositif de protection anti-collision pour des éléments de véhicule en saillie, qui comprend un mécanisme de réglage (2) commandé au moins pour rentrer et/ou rabattre les éléments de véhicule en saillie (1),
**caractérisé en ce que**
le véhicule comporte au moins un capteur de détection de distance ou d'approche (3) relié fonctionnellement au mécanisme de réglage (2) pour détecter la distance et/ou l'approche d'un objet (8) par rapport à un élément de véhicule respectif en saillie (1), et le mécanisme de réglage (2) rentre ou rabat l'élément de véhicule concerné (1) en réponse à un signal de détection (a, b) émis par le capteur (3) et indiquant un risque de collision avec l'objet (8).

2. Dispositif de protection anti-collision selon la revendication 1,
**caractérisé en ce qu'**
un capteur séparé (3) est associé à chaque élément de véhicule en saillie (1).

3. Dispositif de protection anti-collision selon la revendication 2,
**caractérisé en ce que**
la zone de balayage (B) du capteur (3) respectivement des capteurs (3) est dirigée essentiellement vers l'avant dans le sens de la marche (V).

4. Dispositif de protection anti-collision selon la revendication 3,
**caractérisé en ce que**
le capteur (3) est intégré dans l'élément de véhicule en saillie (1).

5. Dispositif de protection selon l'une quelconque des revendications précédentes,
**caractérisé en ce que**
le véhicule comporte un dispositif de commande (7) commandant le mécanisme de réglage (2) et relié au capteur (3) ou aux capteurs (3) et installé afin de déterminer la vitesse d'approche de l'objet (8) par rapport à l'élément de véhicule en saillie respectif (1), et le dispositif de commande (7) commande ou régule la vitesse de retrait ou de rabattement du mécanisme de réglage (2) en fonction de la vitesse d'approche déterminée.

6. Dispositif de protection selon la revendication 5,
**caractérisé en ce que**
le dispositif de commande (7) est en outre installé afin de provoquer le retrait ou le rabattement des éléments de véhicule concernés en fonction d'autres paramètres, comme l'état de stationnement du véhicule, la vitesse du véhicule, le sens de la marche, l'angle de braquage, l'état de la chaussée, etc.

7. Dispositif de protection selon la revendication 6,
**caractérisé en ce que**
le dispositif de commande (7), actionné par d'autres signaux, comme des signaux de contacts de porte ou des signaux de contact d'allumage, rentre respectivement rabat toujours les éléments de véhicule en saillie, lorsque le véhicule est en stationnement.

8. Dispositif de protection selon la revendication 6 ou 7,
**caractérisé en ce que**
la vitesse de retrait ou de rabattement du mécanisme de réglage respectif (2) peut également être commandée ou régulée par le dispositif de commande (7) en fonction de ces paramètres.

9. Dispositif de protection selon l'une quelconque des revendications 1 à 8,
**caractérisé en ce que**
les capteurs de détection de distance ou d'approche (3) pour la détection de la distance ou de l'approche d'un objet sont installés pour des boîtiers de rétroviseurs extérieurs (1) qui peuvent être rabattus ou rentrés chacun par un mécanisme de réglage séparé (2).

10. Dispositif de protection selon la revendication 9,
**caractérisé en ce que**
les capteurs (3) associés aux boîtiers de rétroviseurs extérieurs respectifs sont intégrés dans ces boîtiers de rétroviseurs extérieurs (1).

11. Dispositif de protection selon la revendication 10,
**caractérisé en ce que**
le dispositif de commande (7) commande, en cas de risque de collision, le mécanisme de réglage respectif (2) de telle façon que celle-ci effectue l'opération de rabattement ou de retrait du boîtier de rétroviseur extérieur associé avec une vitesse accrue par rapport à une opération normale de rabattement ou de retrait commandée manuellement.

12. Dispositif de protection selon l'une quelconque des revendications précédentes,
**caractérisé en ce que**
le dispositif de commande (7) est installé afin de déployer à nouveau automatiquement l'élément de véhicule en saillie rabattu lorsque la distance par rapport à l'objet de la collision est suffisante et après que le véhicule a quitté le stationnement.

13. Dispositif de protection selon l'une quelconque des revendications précédentes,
**caractérisé en ce que**
chaque mécanisme de réglage (2) comprend un organe de réglage lent (11) motorisé ou à commande hydropneumatique pour le rabattement et le déploiement normal à commande manuelle des boîtiers de rétroviseurs extérieurs ainsi qu'un organe de réglage rapide (12) assisté par la force de précontrainte d'un organe de ressort précontraint, qui est prévu en parallèle à l'organe de réglage lent et qui est activé par le dispositif de commande (7) en cas de risque de collision pour rabattre ou rentrer le boîtier de rétroviseur extérieur correspondant.

14. Dispositif de protection selon l'une quelconque des revendications précédentes,
**caractérisé en ce que**
le dispositif de commande (7) est installé pour commander par ailleurs, en cas de risque de collision, un dispositif d'avertissement émettant un signal d'avertissement acoustique et/ou optique dans le véhicule.
